# EUROPEAN PATENT APPLICATION

(11) **EP 4 793 515 A1**
(43) Date of publication of application: **19.08.2026**
(21) Application number: 25382120.1
(22) Date of filing: 12.02.2025
(51) Int. Cl.: F16B 31/02

(54) **SMART BOLT WITH FIBER OPTIC SENSORS**

(71) Applicant: Industrias Laneko, S.A.L., 31840 Huarte Araquil Navarra (ES)
(72) Inventor: BEREGAÑA ARRIZABALAGA, José Felix, 31840 HUARTE ARAQUIL (Navarra) (ES); BRAVO ACHA, Mikel, 31840 HUARTE ARAQUIL (Navarra) (ES); SARALEGUI MARIÑELARENA, Iñaki, 31840 HUARTE ARAQUIL (Navarra) (ES); PIÑEIRO BEN, Enrique, 31840 HUARTE ARAQUIL (Navarra) (ES)
(74) Representative: Herrero & Asociados, S.L.

(57) **Abstract**

The smart bolt with fiber optic sensors enables stress monitoring within its structure. It comprises a conventional bolt body (1) with a head (5), a shank (6) featuring a threaded surface (7), and a tip (8). A fiber optic adapter (2) is attached to the bolt body (1), along with a fiber optic sensor arrangement (3) that includes a fiber optic cable embedded in the bolt (1), a connector at one end of the cable, and at least one fiber optic sensor integrated into the cable. Additionally, a sensor connectivity attachment (4) is connected to the fiber optic adapter (2) to link the sensor arrangement (3) with external optoelectronic interrogation units. The fiber optic adapter (2) is assembled in a stress-free region, whereas the sensor arrangement (3) is positioned in a zone subjected to maximum axial stress.

## Description

### Field of the invention

The present invention falls within the technical field of the screwed specifically modified to monitor or limit tensile load. In particular, the present disclosure relates to a smart bolt that comprises fiber optic sensors. Its primary application sector is in structural health monitoring for mechanical fasteners (hereinafter referred to as bolts), which can be used in industries such as civil engineering, aerospace, automotive and power generation.

### Background of the invention

Bolted joints are among the most prevalent fastening mechanisms used in a wide range of engineering applications, spanning industries from aerospace and automotive sectors in transportation to civil infrastructure and power distribution. Ensuring the reliability of these joints is critical, as any loosening can lead to severe structural failures, posing significant safety risks and economic costs. The challenges associated with bolted joints have driven significant innovation in methods to detect loosening or failure at early stages, improving safety and durability in mechanical systems.

Preload, the initial tensile force applied to a bolt during tightening, is a crucial parameter for maintaining joint integrity. Typically achieved using a bolt tensioner or torque wrench, preload stretches the bolt, generating axial stress proportional to the applied force. Within the elastic range of the bolt material, axial stress increases proportionally with preload, as does strain, defined as the relative elongation of the bolt. Preload is essential to counteract external loads and ensure that the clamping force holding the joint together exceeds the forces encountered during operation.

Traditional approaches to bolted joint monitoring relied heavily on manual inspection methods, such as torque measurement. While these methods have been widely employed, they present inherent limitations. Torque measurement is often influenced by frictional forces and other external variables, leading to inconsistencies in correlating torque with axial preload. Furthermore, manual inspections are periodic, fail to provide continuous data, and are impractical in remote or hard-to-access locations, where bolted joints are frequently found.

To address these limitations, modern monitoring methods have shifted toward sensor-based systems, which enable continuous, real-time data acquisition. These systems are broadly categorized into implicit detection and explicit detection methods. Implicit detection often employs piezoelectric ceramic sensors (PZT) to infer loosening severity from non-linear relationships between response signals and preload variations. While effective for qualitative evaluations, this approach lacks the precision needed for accurate preload quantification. Explicit detection methods, in contrast, leverage sensors such as strain gauges, ultrasonic sensors, and Fiber Bragg Grating (FBG) sensors, which provide a clear, often linear relationship between the sensor's output and the preload, enabling precise quantitative measurements after calibration.

Ultrasonic load measurement, based on the acoustoelastic effect, involves analysing the change in the velocity of ultrasonic waves under varying stress conditions. This technique requires systematic calibration to establish the linear relationship between bolt load and time-of-flight (TOF). However, due to non-uniform stress distribution in the effective stressed region of the bolt, ultrasonic methods often produce inconsistent results. Variations in clamping lengths further complicate measurements, making ultrasonic techniques less efficient for industrial applications where bolts are used in diverse configurations.

Strain gauges, another common technology, measure strain by detecting changes in electrical resistance caused by the elongation of the gauge. These sensors are sensitive to temperature fluctuations, which can affect accuracy under varying environmental conditions. Moreover, optimal sensitivity often requires the strain gauge to be bonded within a drilled hole in the bolt's stressed region, potentially weakening the bolt and raising reliability concerns.

Fiber optic sensors, particularly those based on Fiber Bragg Grating (FBG) technology, have emerged as a preferred solution due to their high strain sensitivity, immunity to electromagnetic interference, and minimal impact on bolt integrity. FBG sensors exploit the linear relationship between strain and the wavelength of reflected light, enabling precise, real-time strain measurements. Additionally, FBG sensors have a smaller footprint than strain gauges and can be embedded without compromising the bolt's structural integrity.

Several existing patents have explored integrating fiber optic sensors into bolts to monitor deformation and preload. For example, US10774867 and US8433160 disclose methods of embedding FBG sensors in bolts to enable real-time monitoring of strain and stress. These technologies demonstrate the feasibility of using optical sensors in bolted connections but often involve drilling holes or embedding sensors in regions subjected to maximum stress. Such approaches, while effective for data acquisition, introduce significant manufacturing complexities and increase the risk of crack initiation, ultimately limiting their practical adoption.

Another example can be found in document EP3497342, which discloses an intelligent bolt with a head region containing a cavity that houses sensors for measuring stress through changes in spatial positioning within the cavity. Although this design offers innovative solutions for stress monitoring, it significantly increases production costs and manufacturing complexity, making it less suitable for standard industrial bolts.

Additionally, academic research has provided significant advancements in the field. Song, G., Ren, L., Feng, T., Ho, M., & Jiang, T. (2018). A smart "shear sensing" bolt based on FBG sensors. Measurement, 122, 240-246. This study demonstrated the feasibility of integrating FBG sensors to measure not only axial components but also shear deformations in bolts. This research showcased the adaptability of FBG technology for multidimensional monitoring, offering a robust solution for diverse engineering applications. More recently, Hou, D., Zheng, M., Yang, Z., Li, M., & Li, X. (2024). A tailless FBG smart bolt with excellent performance. Optica Open, 3, 56-65. This study proposed a polymer sandwich structure allowing the FBG sensor to be integrated through the bolt head. This approach improved integration and measurement repeatability, further advancing the field of sensor-based bolt monitoring.

Despite these advancements, a key challenge remains integrating sensors in a way that preserves the bolt's mechanical integrity, simplifies manufacturing, and maintains cost efficiency. Current methods, which often require drilling into stressed regions, face resistance from end-users due to concerns about structural weakening and increased costs. Addressing these challenges is critical for advancing the practical utility of smart bolts in real-world applications.

The present invention builds upon the state of the art by introducing a novel method of integrating fiber optic sensors into bolts without compromising their mechanical properties or increasing manufacturing complexity. This approach avoids drilling into high-stress regions to incorporate the sensors into working areas, therefore ensuring structural integrity and reliability. By leveraging advancements in fiber optic sensor technology and innovative assembly methods, the invention offers a cost-effective, versatile, and robust solution for monitoring bolted joints in critical applications such as civil engineering, aerospace, automotive, and power generation among others.

### Description of the invention

The present invention provides a smart bolt that integrates fiber optic sensors into its working areas, which are subjected to high stress, addressing the limitations of traditional and modern bolted joint monitoring technologies. This invention resolves challenges related to structural integrity, sensor integration, manufacturing complexity, and cost, while ensuring robust and reliable real-time monitoring of tensile stress, strain, and related parameters.

The primary objective of the invention is to deliver a smart bolt capable of accurately and continuously measuring preload and tensile forces in bolted joints without compromising the structural integrity of the bolt. Unlike existing solutions, the invention eliminates the need to drill holes or embed sensors in the regions subjected to maximum stress, which could otherwise lead to crack initiation and eventual failure. Additionally, the smart bolt simplifies manufacturing and integration processes, reducing production costs while maintaining compatibility with a wide range of standard bolts, screws and studs. The invention also ensures that the fiber optic sensors and associated components are integrated into the structure of the bolt, ensuring both the integrity of the bolt and the mechanical integrity of the sensors, while simultaneously measuring key physical variables of the bolt, such as strain and temperature, among others. Furthermore, the modular nature of the invention supports the integration of various types of fiber optic sensors, including those for measuring strain, temperature, vibration, and humidity, among others, making the design adaptable for different industrial applications.

The smart bolt basically comprises a conventional bolt body, to which a fiber optic sensor arrangement and a fiber optic adapter are attached.

The fiber optic sensor arrangement in turn comprises a fiber optic cable, with a length adapted to the application, which serves solely as a medium for light transmission; a connector, located at one end of the fiber optic cable; and at least one sensor, which is embedded in a specific region of the fiber optic cable.

This specific region can be located at any point along the fiber optic cable. The selection of this position determines where the sensor will be located within the bolt. For example, it can be placed in the threaded region of the bolt, which is subjected to stress, or in the bolt shank, which is also subjected to stress. Regarding sensor types, there is a wide variety of sensor configurations, including Fiber Bragg Gratings (FBGs), Mach-Zehnder interferometers, Fabry-Pérot cavities, curvature sensors, and others. These configurations, in turn, allow the implementation of sensors for strain, vibration, humidity, temperature, corrosion, etc.

Attached to this conventional bolt is a modular fiber optic adapter, which is positioned in the stress-free region of the bolt, meaning it does not interfere with the areas subjected to tensile or axial stresses during operation. This strategic positioning ensures that the bolt's structural integrity and load-bearing capacity remain uncompromised, as well as allows the nut to be mounted in the bolt body without any interference.

The fiber optic adapter is a mechanical structure that serves two functions, namely a first one during the assembly process of the smart bolt, and a second one during the service life of the smart bolt.

During the manufacturing process, the fiber optic adapter functions as an assembly tool that facilitates the fixation of the optical fiber in the thread valleys of the bolt. During this process, the adapter temporarily serves as a container for the optical fiber that will be deployed along the bolt. During the service life, the adapter acts as an interface between the bolt and the external environment in the stress-free region, allowing light to enter and exit the bolt. For example, it enables the connection of an external optical fiber to the bolt's optical fiber. This external fiber is connected to the adapter at one end, while the other end may be located kilometres away, where the optoelectronic system receives the sensor signal.

The adapter also includes a female fiber optic connector, such as for instance SC, FC, LC, or M12 types, which enables easy and reliable connection to external optoelectronic interrogation units. This modular connectivity ensures compatibility with various interrogation systems, facilitating efficient data collection and analysis. To further protect the bolt, the invention may also comprise surface treatments such as epoxy coatings, which provide mechanical protection and resistance to environmental factors, cold galvanizing to enhance corrosion resistance without hindering the functionality of the bolt's threads, and polymer coatings for added flexibility and shielding. These protective measures ensure the long-term durability and reliability of the smart bolt under demanding operational conditions.

The manufacturing process of the smart bolt is straightforward yet robust. It begins with the placement of an end of each the fiber optic sensor inside the fiber optic adapter, with the free end of the fiber extending through a lateral opening for bonding onto the bolt's thread. As explained before, the adapter temporarily serves as a container for the optical fiber that will be deployed along the bolt.

Using an automated system, the fiber is carefully adhered along the threaded region of the bolt using a high-strength adhesive. This adhesive ensures that the fiber remains securely in place during operation, even under extreme mechanical loads. Once the fiber is bonded, the adapter is fixed onto the bolt's threaded end using adhesive bonding, mechanical fit, or other joining technologies. The final assembly can undergo surface treatment for additional protection.

This innovative design offers several significant advantages. By positioning the adapter in a stress-free region and securing the optical fiber superficially within the thread valleys of the bolt, the invention preserves the mechanical properties and load-bearing capacity of the bolt, avoiding the drawbacks associated with drilling holes into the bolt body. The use of fiber optic sensors, particularly Fiber Bragg Grating (FBG) technology, ensures precise measurement of strain, stress, and other parameters, with minimal calibration requirements due to the linear relationship between strain and the wavelength of reflected light. Furthermore, the modular adapter design simplifies manufacturing and allows for versatile integration of different types of sensors, making the invention adaptable to various industrial needs.

The invention is particularly suitable for use in industries such as civil engineering, where it can monitor the structural health of bridges, buildings, and other critical infrastructure; aerospace, for ensuring the integrity of fasteners in aircraft and spacecraft; automotive, for real-time monitoring of bolted joints in vehicles; and power generation, for tracking the performance of bolted connections in wind turbines, power plants, and other energy systems.

In conclusion, this invention represents a significant advancement in structural health monitoring by providing a smart bolt that eliminates the drawbacks of traditional sensor integration methods. It combines robustness, accuracy, and cost-efficiency while offering unparalleled versatility and adaptability for diverse applications.

### Brief description of the drawings

To complement the description and to aid in a better understanding of the features of the invention, in accordance with a preferred practical embodiment of the same, a set of drawings is included as an integral part of this description, in which the following is shown in an illustrative but non-limiting manner:
Figure 1.- Shows a perspective view of the smart bolt.
Figure 2.- Shows a detail of a tip of the bolt with the fiber optic adapter.
Figure 3.- Shows a front view of a section of the smart bolt of figure 1.
Figure 4.- Shows a top perspective view of the fiber optic adapter.
Figure 5.- Shows a bottom perspective view of the fiber optic adapter.

### Detailed description of a preferred embodiment of the invention

The following provides, with the help of the aforementioned figures, a detailed explanation of a preferred embodiment of the subject of the present invention.

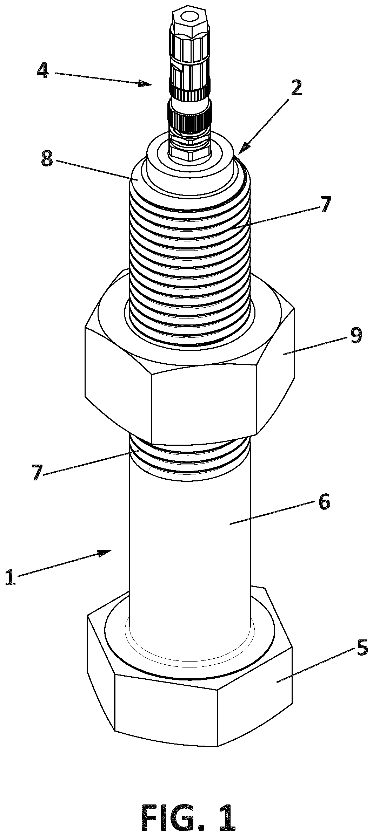

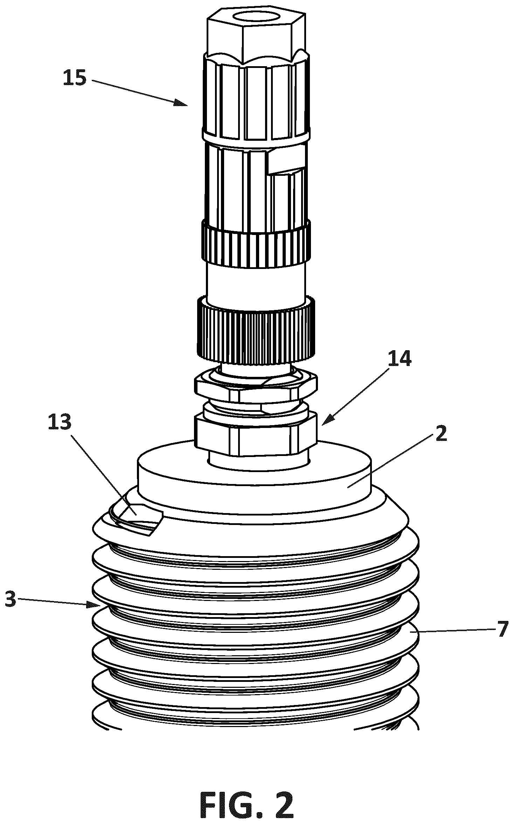

The smart bolt with fiber optic sensors described herein, shown in figures 1-3, basically comprises a conventional bolt body (1), a fiber optic adapter (2) assembled onto one end of the bolt body (1), a fiber optic sensor arrangement (3) integrated within the bolt body (1) and connected to the fiber optic adapter (2), and a sensor connectivity attachment (4) connected to the fiber optic adapter (2).

In the embodiment described herein, the bolt body (1) is of a standard type to ensure compatibility with existing fastening systems and operational requirements. The bolt body (1) is made from high-strength materials such as galvanized steel, ensuring durability and resistance to mechanical and environmental stresses, and comprises a stainless-steel hexagonal head (5), a shank (6) with a threaded surface (7), and a tip (8). An adjustable nut (9) is movable along the threaded surface (7) of the shank (6). In alternative embodiments of the bolt, the bolt body (1) can be standardized or special and with or without the addition of protective coverings.

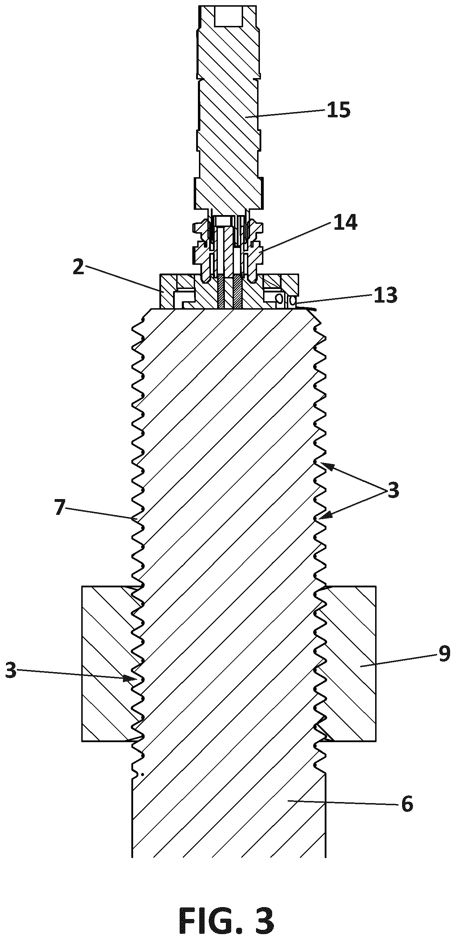

The fiber optic sensor arrangement (3) in turn comprises at least a fiber optic cable, in which fiber optic sensors are integrated, and a connector, located at one end of the fiber optic cable. In this embodiment, the fiber optic cable is embedded within the threads of the threaded surface (7) of the bolt body (1), as it can be seen in figure 3, which is the region subjected to an axial stress. In this case, the fiber optic cable is adhesively bonded within the threads.

In the embodiment described here, the smart bolt comprises two types of fiber optic sensors, namely a temperature sensor and a strain sensor. The effect of the axial stress is a proportional change in the nominal length of the bolt body (1). This deformation is precisely measured through the strain sensor and is independent of the length of the clamping area.

The invention allows the integration of further types of fiber optic sensors, such as vibration sensors, to detect dynamic loads or environmental vibrations impacting the bolted joint, or humidity sensors, to assess environmental conditions that may accelerate corrosion. The invention also allows the integration of the additional fiber optic sensors in different areas of the bolt body (1), apart from the mentioned the threaded surface (7), such as for instance the shank (6).

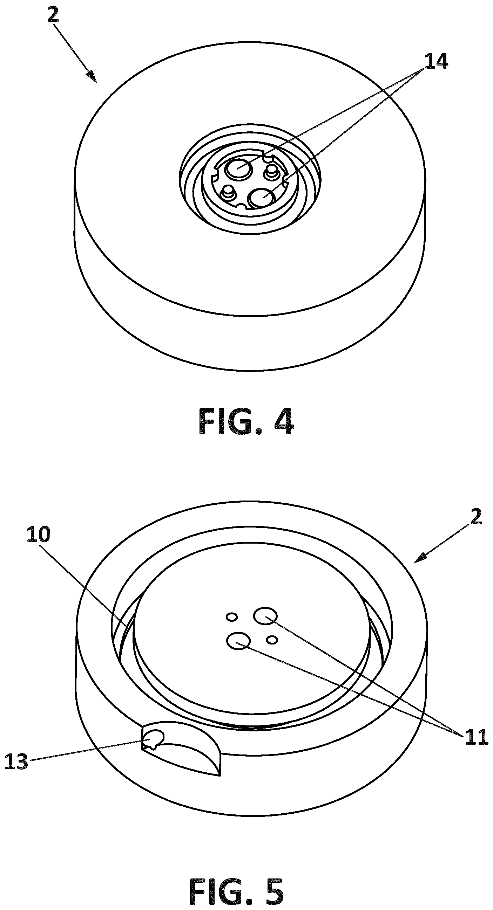

The fiber optic adapter (2), shown in detail in figures 4 and 5, provides a dedicated housing for the connector located at the end of the fiber optic cable. The fiber optic adapter (2) is attached to the tip (8), a stress-free region of the bolt body (1), ensuring it does not interfere with areas subjected to tensile or axial stresses during operation. This positioning preserves the bolt's structural integrity and load-bearing capacity.

In this embodiment, the fiber optic adapter (2) has a diameter smaller than that of the bolt body (1) to allow a nut to pass through the threaded region without obstruction, ensuring seamless integration into existing fastening systems.

In this preferred embodiment, the fiber optic adapter (2) comprises at least one fitting (10) for the connection of the sensor connectivity attachment (4), positioning pins (11), an internal housing (12) and at least one through hole (13) for connection with the internal housing (12). Said internal housing (12) shelters the connector of the fiber optic cable, which penetrates on the housing through the through hole (13).

The sensor connectivity attachment (4) connects the fiber optic sensor arrangement (3) with external optoelectronic interrogation units, not shown in the figures. The sensor connectivity attachment (4) comprises a lower female fiber optic connector (14), attached to the fitting (10) of the fiber optic adapter (2), and a corresponding male fiber optic connector (15). This sensor connectivity attachment (4) ensures compatibility with various fiber optic interrogation systems, facilitating signal collection and analysis.

The female fiber optic connector (14) can be selected from the group comprising SC, FC, LC, or M12 connectors, among others.

To safeguard the fiber optic cable of the fiber optic sensor arrangement (3), the invention can further comprise surface treatments such as:
- epoxy coatings, for providing mechanical protection and resistance to environmental factors;
- cold galvanizing, for enhancing corrosion resistance without hindering the functionality of the bolt's threads; or
- polymer coatings, for offering flexibility and additional shielding for the optic cables.

These protective measures ensure the long-term durability and reliability of the smart bolt under demanding operational conditions.

This invention provides a smart bolt based on fiber optic sensors, without compromising the mechanical integrity of the bolt and providing accurately measure of the bolt's load, regardless of the clamping configuration, and to prevent loosening over its service life. The essential feature is that the fiber optic adapter (2) is assembled onto the bolt body (1) in the stress-free region, meaning that the areas of the bolt subjected to stress are not affected by the fiber optic adapter (2).

## Claims

1. Smart bolt with fiber optic sensors **characterized in that** it comprises:
- a bolt body (1);
- a fiber optic adapter (2) attached to bolt body (1);
- a fiber optic sensor arrangement (3), in turn comprising:
- a fiber optic cable embedded within the bolt body (1);
- a connector, located at one end of the fiber optic cable; and
- at least one fiber optic sensor integrated in the fiber optic cable; and
- a sensor connectivity attachment (4) attached to the fiber optic adapter (2) for connection of the fiber optic sensor arrangement (3) with external optoelectronic interrogation units;
wherein the fiber optic adapter (2) is assembled in a stress-free region of the bolt body (1) and the fiber sensor arrangement (3) is assembled in a region of the bolt body (1) subjected to an axial stress.

2. Smart bolt according to claim 1, wherein the bolt body (1) is conventional and comprises a head (5), a shank (6) with a threaded surface (7), and a tip (8).

3. Smart bolt according to claim 2, wherein the fiber optic cable of the fiber optic sensor arrangement (3) is embedded within the threads of the threaded surface (7).

4. Smart bolt according to claim 2, wherein the fiber optic adapter (2) is attached to the tip (8).

5. Smart bolt according to any of the preceding claims, wherein the fiber optic adapter (2) comprises an internal housing (14), at least one through hole (15) for connection with the internal housing (14), a fitting (12) and positioning pins (13).

6. Smart bolt according to any of the preceding claims, wherein the sensor connectivity attachment (4) in turn comprises a lower female fiber optic connector (14) and a male fiber optic connector (15).

7. Smart bolt according to any of the preceding claims, wherein the at least one fiber optic sensor comprises a temperature sensor, a strain sensor, a vibration sensor and/or a humidity sensor.

8. Smart bolt according to any of the preceding claims further comprising a surface treatment selected from the group comprising epoxy coatings, polymer coatings and/or cold galvanizing.

9. Smart bolt according to claim 6 wherein the female fiber optic connector (14) is selected from the group comprising SC, FC, LC, or M12 connectors.

10. Smart bolt according to claim 2 wherein the head (5) of the bolt body (1) is a stainless-steel hexagonal head (5).

11. Smart bolt according to claim 2 wherein the bolt body (1) further comprises an adjustable nut (9) movable along the threaded surface (7) of the shank (6).
